# EUROPEAN PATENT SPECIFICATION

(11) **EP 2 705 122 B1**
(45) Date of publication and mention of the grant of the patent: **10.04.2019**
(21) Application number: 11797279.4
(22) Date of filing: 14.06.2011
(51) Int. Cl.: C10K 1/00, C10C 1/19, C10J 3/84, F23G 5/027, C10K 3/00, B01J 19/08, B01J 19/24, B01D 53/00, C10K 1/12, F02C 3/28, F23G 5/08, F23G 7/06, C10B 53/00

(54) **PROCEDURE AND INSTALLATION FOR PLASMA HEAT TREATMENT OF A GAS MIXTURE**
VERFAHREN UND ANLAGE ZUR PLASMAWÄRMEBEHANDLUNG EINES GASGEMISCHES
PROCÉDÉ ET INSTALLATION POUR LE TRAITEMENT THERMIQUE PAR PLASMA D'UN MÉLANGE GAZEUX

(30) Priority: 03.05.2011 RO 201100415
(43) Date of publication of application: 12.03.2014
(73) Proprietor: Frâncu, Costin-Marian, Bucuresti (RO); Frâncu, Bogdan-Sabin, Bucure ti (RO); Dan, Lucian-Victor, Constan a Jud. Constan a (RO)
(72) Inventor: FRANCU, Costin-Marian, Bucuresti (RO)
(74) Representative: Haseltine Lake LLP
(86) International application number: PCT/RO2011/000018
(87) International publication number: WO 2012/150871

(56) References cited:
- WO-A2-2009/156761
- GB-A- 2 180 849
- US-A1- 2008 097 137
- US-A1- 2009 077 887

## Description

This invention relates to a procedure and an installation for plasma heat treatment of a gas mixture resulted from the decomposition of organic materials and enables the use of this gas mixture to produce heat and electricity. The gas mixture under treatment is the result of decomposition of organic material by pyrolysis, gasification, composting, natural fermentation or other decomposition procedures.

Pyrolysis and gasification processes are widely studied processes used to convert organic material into energy. The energetic gas produced by these processes still contains tars that are toxic chemical compounds, making the gas unsuitable for use in equipments to produce energy (motors, turbines, steam generators, etc.). Limiting the amount of tar in the gas resulted from pyrolysis and gasification was achieved through the use of organic materials specific to each constructive type of equipment and by filtering or conditioning gas, leading to high costs for both the preparation and obtaining of raw material as well as for process control.

Tars are aromatic organic compounds. So far there have been over 1.200 different compounds identified in this family, some of them having in their composition Cl, S and F atoms.

There are known technologies for tar cracking and fractional distillation, but prices are prohibitive in industrial exploitation and the efficiency of tar reducing in the gas mixture does not exceed 70%, in particular for dioxins and furans. Those types of tars which are soluble in water or oil can be removed with existing technologies, but also result in increased operating costs and large amount of unusable waste.

A technology for the treatment in plasma of the gas resulted from gasification is shown in patent EP 1896774 B1 (Tetronics Ltd. (GB)). According to the patent description, attention is focused on slag vitrifying resulting from gasification in the disadvantage of a complete and effective treatment of tar. According to the examples given in the description of the invention, energy consumption necessary for gas and slag treatment resulting from the gasification of 42 kg of waste is of 79 kWh, which is equivalent to energy consumption of 1.88 MWh/tonne of waste. Although energy consumption is very high in plasma, the inventors do not specify in the examples presented, any information regarding the effectiveness of gas treatment, such as traces of tar in the final gas, composition of final gas or toxic emissions on the chimney's stack for the steam generator/gas turbine.

Another method of treating gas resulted from gasification is presented in the patent application US 2009/0077887 A1 filed by EU OPLASMA (FR). According to the patent application, the gas resulting from gasification (called syngas) is introduced into a plasma reactor by a circular bean (claim 14), coaxial with the plasma jet, together with a fluid selected from water and carbon dioxide in order to adjust syngas composition. Plasma's speed, referred to in the description, (400 m/s, corresponding to a Mach number 1,4) in conjunction with syngas input mode, can only produce turbulent peripheral effects in the plasma due to Daniel Bernoulli's principle (Hydrodynamics 1783) applied to compressible fluids on small supersonic speeds, highlighted by the Venturi effect. The patent application does not contain any practical examples or concrete references on energy efficiency and effectiveness of tar decomposition, performed by the proposed technology.

Another solution known to remove tar is burning of the gas resulted from gasification and pyrolysis. This solution applied to some municipal waste incineration technologies leads to high operating costs that limit the expansion of technology.

Through relatively new technologies used in composting plants, a biogas is obtained from municipal waste, levigated and catalysts treated, mainly biological, which, besides tar, it contains methane radicals, biological compounds and other macromolecules. This gas, with a variable heating power, can be used with considerable filtering difficulties only in proportion of 30% (as long as the percentage of methane is greater than 50%) the remaining gas, although very dangerous, is presently released into the atmosphere.

Gas resulted from landfill waste by natural fermentation, energy unusable due to uncontrollable variations in caloric content, also contains greenhouse gas emissions, which led to the ban on landfill disposal of organic materials.

The technical problem solved by this invention, is the incomplete and ineffective treatment of tar contained in the gas generated by decomposing of organic material.

The purpose of the invention is to decompose tars and other macromolecular types of compounds from gases resulting from the decomposition of organic material. The present invention is defined in and by the appended claims. In particular, the invention provides a process for plasma heat treatment of a gas mixture resulting from the decomposition of organic material by pyrolysis, gasification, composting, natural fermentation or other processes of decomposition, characterized in that it consists of:
- feeding of a gas mixture divided into 2 - 4 different streams containing 10 - 60 g/m³ tar, tangential to the direction of a jet of plasma, so that the gas mixture creates a vortex around the jet of plasma that has a temperature of 10,000 - 16,000°C and is ejected with a blast air with pressure of 10 - 14 bar and a controlled rate;
   - producing thus a primary gas without organic macromolecules but containing vitrified inorganic materials;
   - the decrease of primary gas speed by its expansion;
   - cooling of the primary gas at a temperature of 800 - 1000 °C due to endothermic reactions;
   - solidification and gravity separation of the cooled primary gas, of vitrified inorganic particles;
   - primary gas cooling to below and up to 60 °C, followed by its barbotage into a NaOH solution to remove unwanted chemical elements, resulting in a final gas mixture, and
   - transport of the resulting final gas mixture to be converted into electricity by cogeneration/trigeneration, wherein
- the controlled flow of the plasma jet depends on the amount of CO₂ measured in the final gas mixture such that depending on the content of CO₂ the amount of air used to produce the plasma jet is automatically adjusted such that the percentage of CO₂ positively tends to zero.

Air feed used for plasma generation and ejection in the form of jets, may be dosed so that the amount of CO₂ measured in the final gas mixture does not exceed 0.1%.

The procedure according to the invention, may take place at pressure lower than atmospheric pressure, preventing thus any gas leaks.

The installation for plasma thermal treatment of a gas mixture according to the invention comprises a reactor consisting of a cylindrical room where a plasma generator that produces a plasma jet is arranged axially, and an expansion room equipped with a hydraulic lock for the evacuation of vitrified materials, a heat exchanger to cool the resulted primary gas, a scrubber for the chemical treatment of the gas, a CO₂ analyzer which device, in use, monitors the content of CO₂ and adjusts the amount of oxygen/air used in the plasma generator, and a gas-moving system for its delivery to the equipment of electricity production in cogeneration/trigeneration, the cylindrical room being equipped with 2-4 inlet nozzles of the gas to be treated, arranged tangetially.

The cylindrical room may have a diameter of 0.5-2 m and a length of 0.3-1.2 m, cooled with water and insulated at the interior with refractory brick.

The expansion room may be equipped with a hydraulic lock for the discharge of the vitrified material and an opening for the discharge of the final gas mixture.

Also, the expansion room may have a volume of 1-5% of the hourly volume of the gas to be treated, for a gas flow area of 0.2 m⁻¹ of the expansion room's volume.

The area of the expansion room may be 10-15 times bigger than the one of the cylindrical room. Gas mixture resulted from the process according to the invention may be used to produce heat energy and electricity in cogeneration / trigeneration in piston engines coupled with electric generator and blast-heating apparatuses, gas turbines or groups of steam generator, steam turbine, electric generator and blast-heating apparatuses.

The process and installation according to the invention has the following advantages:
- Unlike similar procedures known, ensures the obtaining of a final gas mixture with no tars, with all the advantages deriving from it;
- Allow instant decomposition of all organic macromolecules from the treated gas, with low energy consumption in the plasma, thanks to the deep mixing of gas in the plasma's ionized environment.
- Ensures the obtaining of a final gas mixture with maximum energy capacity obtainable from the primary gas, by complete oxidation of resulted carbon from the decomposition of macromolecules, to CO.
- Gives reliability and avoids accidental pollution because the process is conducted at lower than atmospheric pressure.

The process and installation for the treatment of gas resulted from the decomposition of solid or liquid organic materials, ensures the transformation of toxic or unwanted components into chemical elements and molecules with energetic potential at combustion. From this process it results a clean gas with caloric capacity higher than the input gas, which can be used to obtain electricity.

The invention is based on the finding that all undesirable components occurring in the gas resulting following the decomposition of organic materials, have tars in component, groups of form CxHy, CxHyOz and macromolecular compounds containing atoms of Cl, S, F etc. as well as biological macromolecules which, depending on the origin may be toxic or dangerous. All of these macromolecular compounds can be thermally dissociated at temperatures above 1,500 ° C, by endothermic reactions.

In one embodiment, the gas to be treated is introduced tangentially through at least two, maximum four intake systems (type nozzle) **3,** in the cylindrical room **2,** axially equipped with a plasma generator **4.** Plasma is produced in a plasma generator **4** without transfer, using air as generating gas. Air is introduced between the electrodes at a pressure of 10-14 bar and the plasma is ejected in the cylindrical room **2** with a speed of 400-500 m/s (1.5 - 2 Mach). In this room, the gas introduced tangentially through intake systems **3** with a speed of 20-25 m / s, creates a vortex. The vortex is characterized by high speed at its exterior side which ensures good thermal protection of the cylindrical room's walls **2** and a low speed, respectively high pressure, in the core. High pressure in the vortex core (vortex) produces a homogeneous mixture of the gas in the plasma environment Thus, gas molecules enter the plasma's core, which is absolutely necessary, because here, at temperatures between 10.000 and 16.000 ° C, all the molecules dissociate into atoms instantly, some atoms lose electrons form the final layer to become ions and it occurs a strong interaction between the positively charged ions, free electrons and neutral atoms. Only fringe effects take place at the surface of the plasma that can not ensure a total and irreversible decomposition of organic macromolecules (mainly dioxins and furans) in a short time. Under these conditions, all macromolecular compounds decompose instantly into constitutive elements and inorganic components (gas may contain dust, metal vapours, etc.) vitrify.

From the cylindrical room **2,** gas passes into the expansion room **5.** It is known that at high temperatures, carbon has a high affinity to oxygen, therefore, from all free chemical elements resulting from the dissociation produced in the vortex of the cylindrical room **2,** the carbon will oxidize first, resulting in CO and CO₂, following that CO₂ reduces to CO by successive collisions with free carbon atoms.

For this reason, the amount of O₂ should be controlled so as to oxidize all carbon but, in the final gas mixture, to exist only traces of CO₂ The expansion room **5,** with an area of 10 to 15 times bigger than the cylindrical room **2,** ensures gas expansion and its speed being reduced. Thus, at the same time with the cooling of the gas due to endothermic reactions, vitrified inorganic particles solidify and separate gravitationally from the gas, and gas temperature goes below 1000 ° C. Vitrified inorganic particles are removed by hydraulic lock **6.**

From reactor **1** for thermal treatment, the gas mixture passes through the opening **7** for the evacuation of the gas mixture in the heat exchanger **8** where its temperature drops to maximum 60 ° C. When using an installation for gas cleaning resulting from pyrolysis and gasification, it is preferable to use a gas/gas heat exchanger and the energy resulting from the cooling of heat-treated gas is used in the process of pyrolysis.

From the heat exchanger **8,** the gas mixture is introduced into the scrubber **9** for removal by washing, of the unwanted chemical elements/components such as NOx, SO2, Cl2, F2.

From scrubber **9,** the final gas mixture is absorbed by a gas-moving system **11,** consisting of a ventilator, in order to deliver it to a piston engine or a steam generator to produce electricity in cogeneration / trigeneration.

According to the invention, the installation operates at low pressure, with no risk of gas leakage into the atmosphere.

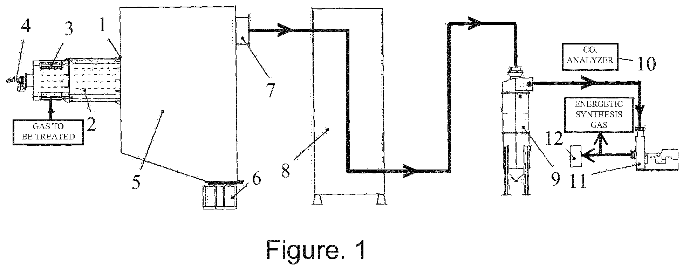

The following are the components of the installation for plasma heat treatment of a gas mixture, in connection with Figures 1, 2 and 3, representing:
Fig. 1 - the main components of the plant according to the invention;
Fig. 2 - view of the reactor **1;**
Fig. 3 - transverse and longitudinal section through the cylindrical room **2.**

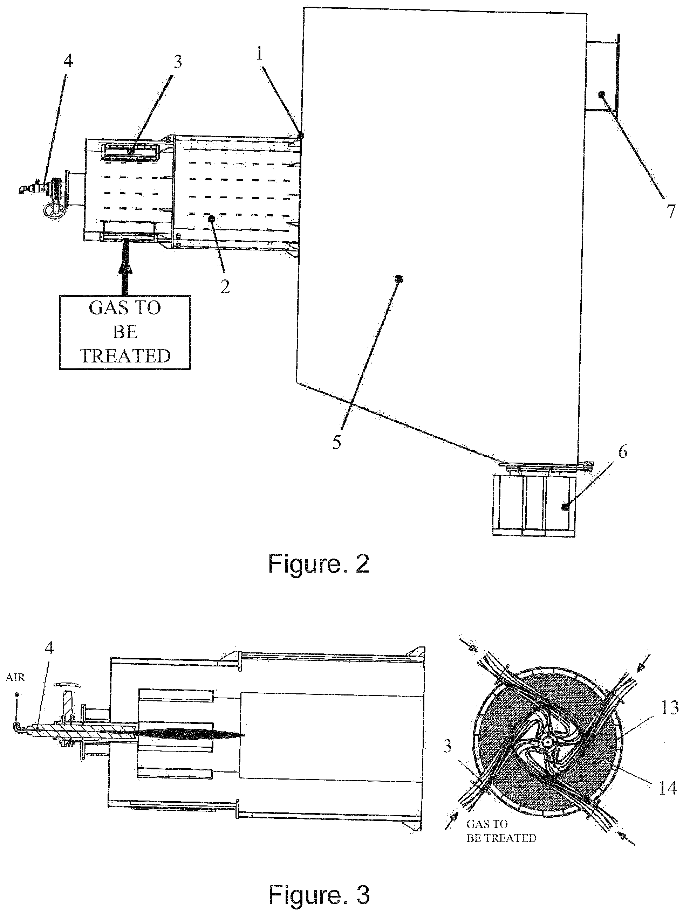

Reactor **1** (Fig. 2) is a sealed metal room lined with refractory brick. Reactor **1** has two different areas between them in form and function, the cylindrical room **2** and the expansion room **5** of the gas. The cylindrical room **2** where the vortex is formed, shown in Fig.3, is a cylindrical room provided with an axial input for the plasma generator 4 and with 2-4 intake systems **3** for the gas to be treated, nozzle type, which are arranged tangentially. The constructive shape and the manner of introduction of the gas to be treated in the cylindrical room **2,** respectively in the plasma jet, forms in reactor **1** a vortex where the gas is homogeneously mixed in the plasma environment. In this area, at temperatures between 10.000 and 16.000 ° C, the decomposition of tars and of the other macromolecular compounds in the constituent chemical elements takes place. The expansion room **5** of the gas is a room with a minimum of 1% of the hourly volume of the gas to be treated, for a gas flow area of 0.2 m⁻¹ of the expansion room's volume. These formal requirements of the expansion room **5** ensure the minimum necessary conditions for oxidation of carbon at CO and gravity separation of vitrified indifferent gas. Indifferent gasses are discharged from the bottom of the reactor through a hydraulic lock **6.** Reactor **1** is provided with a measuring and control system for temperature and pressure parameters.

Plasma generator **4** provides the required temperature for the decomposition of tars and of biological macromolecules existing in the gas to be treated. Plasma generator **4** is of the free transfer type and uses instrument air at a pressure of 10-14 bar as the generating gas of the plasma. Air propels plasma in the cylindrical room **2** under the form of a jet at speeds of 400-500 m / s (1.5-2 Mach). The amount of air is controlled by the amount of free carbon in the gas, so that the amount of CO₂ measured in the final gas mixture does not exceed 0.1%. The range of capacity of the plasma generator is 200-700 kW, depending on the composition, origin and flow of the gas to be treated.
The heat exchanger **8** is a transfer equipment of type gas-gas/gas-liquid, multi-tubular, equipped with means of measurement and temperature control. This allows rapid cooling of the treated gas from 1000° C at maximum 60° C.

Scrubber **9** is the equipment for washing and drying of the gas to be treated. Equipped with intake and evacuation means of the basic solution of NaOH 40%, means of recirculation and filtration, retention means and moisture evacuation, measurement and control of pH and temperature, scrubber **9** ensures the removal of acid components (soluble) by barbotage in aqueous solution.

The moving system of the final gas mixture **11** (the fan) is a device that provides transportation of the gas to be treated, maintaining low pressure conditions in the entire facility.

Gas analyzer **10,** required to determine the concentration of CO₂, is a device that monitors the composition of the final gas mixture, resulting after treatment in the plasma. Depending on the content of CO₂, the amount of oxygen / air introduced into the heat treatment process as a generator gas of plasma is automatically adjusted. So that heat treatment is considered effective, the percentage of CO₂ in the final gas mixture must positively tend to zero.
Below is an example of concrete realization of the procedure according to the invention, in connection with its associated installation.

### Example

A volume of 10 tons/hour of municipal waste containing 10-58 g / m³ of tar is subject to gasification and exhaust gases are conducted for heat treatment, to a plasma reactor **1,** where they are placed in the cylindrical room **2** through 4 nozzles **3,** with a speed of 23 m/s in order to form a vortex around the plasma jet with a temperature of 13.000-14.000 ° C and which is generated with blast at a pressure of 11-13 bar. In the cylindrical room **2,** plasma is propelled under the form of a jet with a speed of 400-500 m/s (1.5-2 Mach). From the cylindrical room **2,** the primary gas containing vitrified material is led into the expansion room **5,** where the decrease of the primary gas's speed takes place, by its expansion, at the same time with its cooling at a temperature of 800-1000 ° C due to endothermic reactions, with solidification and gravity separation from the cooled primary gas, of vitrified inorganic particles by the hydraulic lock **6**. Primary gas cooling up to 60° C, followed by its barbotage into a NaOH solution to remove unwanted chemical elements is made in scrubber **9.** It results a final gas mixture, free of tar and containing CO₂ that tends to zero. It is transported to the equipment **12** for electricity production in cogeneration/trigeneration.
In the following table the experimental results obtained in an industrial plant for energy recovery of municipal waste, by gasification, are presented, following the treatment of gas resulting from their gasification, according to the process and through the installation of plasma heat treatment, according to the invention.

| | Gasifier | Plasma Generator | Cogeneration plant |
|---|---|---|---|
| Waste (tons/hour) | 10 | | |
| Air (m³/h) | 4.800 | 20 | 50.000 |
| Electricity consumption (Kwh) | | 250 | |
| Tar and macromolecules (g / Nm³) | 10-58 | | 0 |
| Heat energy supplied (Gcal) | 2,5 | | 10 |
| Electricity supplied (MWh) | | | 8 |

Measuring the amount of tar was made at the entry and exit of gas from the gas treatment installation.

## Claims

1. The process for plasma heat treatment of a gas mixture resulting from the decomposition of organic material by pyrolysis, gasification, composting, natural fermentation or other processes of decomposition, **characterized in that** it consists of:
- feeding of a gas mixture divided into 2 - 4 different streams containing 10 - 60 g/m³ tar, tangential to the direction of a jet of plasma, so that the gas mixture creates a vortex around the jet of plasma that has a temperature of 10,000 - 16,000°C and is ejected with a blast air with pressure of 10 - 14 bar and a controlled rate;
- producing thus a primary gas without organic macromolecules but containing vitrified inorganic materials;
- the decrease of primary gas speed by its expansion;
- cooling of the primary gas at a temperature of 800 - 1000 °C due to endothermic reactions;
- solidification and gravity separation of the cooled primary gas, of vitrified inorganic particles;
- primary gas cooling to below and up to 60 °C, followed by its barbotage into a NaOH solution to remove unwanted chemical elements, resulting in a final gas mixture, and
- transport of the resulting final gas mixture to be converted into electricity by cogeneration/trigeneration, wherein
- the controlled flow of the plasma jet depends on the amount of CO₂ measured in the final gas mixture such that depending on the content of CO₂ the amount of air used to produce the plasma jet is automatically adjusted such that the percentage of CO₂ positively tends to zero.

2. Process according to claim 1, wherein the gas mixture as divided into 2 - 4 different streams is fed at a speed of 20-25m/s.

3. Process according to any one of claims 1-2, **characterized in that** the air feed used for the generation and expansion of plasma under the form of a jet is dosed so that the amount of CO₂ measured in the final gas mixture does not exceed 0.1%.

4. Process according to any one of claims 1-3, **characterized in that** it is performed at lower pressure than atmospheric pressure, thus preventing any gas leaks.

5. Installation for plasma heat treatment of a gas mixture resulting from the decomposition of organic materials by pyrolysis, gasification, composting, natural fermentation or other processes of decomposition **characterized in that** it comprises a reactor (1) consisting of a cylindrical room (2) where a plasma generator is axially arranged (4) that produces a plasma jet, and an expansion room (5) provided with a hydraulic lock (6) for the evacuation of vitrified materials, a heat exchanger (8) for the cooling of the resulted primary gas, a scrubber (9) for gas chemical treatment, a CO₂ analyzer (10) which device, in use, monitors the content of CO₂ and adjusts the amount of oxygen/air used in the plasma generator (4) and a gas-moving system (11) for its delivery to the equipment of electricity production in cogeneration/trigeneration, the cylindrical room (2) being provided with 2 - 4 intake systems (3) of the gas to be treated, arranged tangentially.

6. Installation according to claim 5, **characterized in that** the cylindrical room (2) has a diameter of 0.5 - 2 m and a length of 0.3 - 1.2 m is cooled with water (13) and insulated, at the interior, with refractory brick (14).

7. Installation according to any one of claims 5-6, **characterized in that** the expansion room (5) is provided with a hydraulic lock (6) for the discharge of the vitrified material and with an opening (7) for the evacuation of the final gas mixture.

8. Installation according to any one of claims 5-7, **characterized in that** the expansion room (5) has a volume of 1 - 5% of the hourly volume of the gas to be treated and a gas flow area of 0.2 m⁻¹ of the expansion room (5) volume.

9. Installation according to any one of claims 5-8, **characterized in that** the area of the expansion room (5) is 10 - 15 times bigger than the area of the cylindrical room (2).

## Patentansprüche

1. Verfahren zur Plasma-Wärmebehandlung eines aus der Zersetzung von organischem Material durch pyrolytische Zersetzung, Vergasen, Kompostierung, natürliche Fermentation oder andere Zersetzungsprozesse resultierten Gasgemisches, **dadurch gekennzeichnet, dass** es sich wie folgt zusammensetzt:
- ein in 2 bis 4 verschiedene Ströme aufgeteiltes Gasgemisch mit 10 bis 60 g/m³ Teer tangential zur Richtung eines Plasmastrahls zuführen, so dass das Gasgemisch einen Wirbel um den 10.000 bis 16.000 °C heißen Plasmastrahl erzeugt und durch Blasluft mit einem Druck von 10 bis 14 bar in kontrollierten Mengen ausgestoßen wird;
- ein Primärgas ohne organische Makromoleküle aber mit verglasten anorganischen Materialien herstellen;
- die Primärgasgeschwindigkeit nimmt mit der Expansion des Gases ab;
- das Primärgas kühlt durch endotherme Reaktionen bei einer Temperatur von 800 bis 1000 °C ab;
- Verfestigung und Schwerkrafttrennung der verglasten anorganischen Partikeln im abgekühlten Primärgas;
- Kühlung des Primärgases auf unter und bis zu 60 °C, gefolgt von einer Spülung in einer NaOH-Lösung zur Entfernung unerwünschter chemischer Elemente, wodurch das Endgasgemisch entsteht und
- Transport des resultierenden Endgasgemisches, das durch Kraft-Wärme-Kopplung (KWK) / Kraft-Wärme-Kälte-Kopplung (KWKK) in Elektrizität umgewandelt werden soll, wobei
- der geregelte Plasmastrahlfluss vom im Endgasgemisch gemessenen CO₂-Gehalt abhängt, so dass die zur Erzeugung des Plasmastrahls verwendete Luftmenge je nach CO₂-Gehalt automatisch so eingestellt wird, dass der CO₂-Anteil Richtung Null geht.

2. Verfahren gemäß Anspruch 1,
wobei das in 2 bis 4 verschiedene Ströme aufgeteilte Gasgemisch mit einer Geschwindigkeit von 20 bis 25 m/s zugeführt wird.

3. Verfahren gemäß einem der Ansprüche 1 bis 2, **dadurch gekennzeichnet, dass** die zur Erzeugung und Ausdehnung des Plasmastrahls zugeführte Luft so dosiert wird, dass der im Endgasgemisch gemessene CO₂-Gehalt 0,1 % nicht überschreitet.

4. Verfahren gemäß einem der Ansprüche 1 bis 3, **dadurch gekennzeichnet, dass** es bei einem niedrigeren Druck als dem Atmosphärendruck durchgeführt und somit ein Gasaustritt verhindert wird.

5. Anlage zur Plasma-Wärmebehandlung eines aus der Zersetzung von organischem Material durch pyrolytische Zersetzung, Vergasen, Kompostierung, natürliche Fermentation oder andere Zersetzungsprozesse resultierten Gasgemisches, **dadurch gekennzeichnet, dass** sie einen wie folgt zusammengesetzten Reaktor (1) aufweist: einen zylindrischen Raum (2), in dem ein den Plasmastrahl erzeugender Plasmagenerator (4) axial angeordnet ist, einen mit einer Hydrosperre (6) ausgestatteten Expansionsraum (5) für den Abtransport verglaster Materialien, einen Wärmetauscher (8) zur Kühlung des Endprimärgases, einen Gaswäscher (9) für die gas-chemische Behandlung, einen CO₂-Analysator (10), der den CO₂-Gehalt während des Betriebs überwacht und die im Plasmagenerator (4) verwendete Sauerstoff-/Luft-Menge reguliert und ein Gas-Transportsystem (11), welches das Gas an die zur Stromerzeugung verwendete KWK/KWKK-Anlage transportiert, wobei der zylindrische Raum (2) für das zu behandelnde Gas mit 2 bis 4 tangential angeordneten Einlasssystemen (3) versehen ist.

6. Anlage gemäß Anspruch 5, **dadurch gekennzeichnet, dass**
der zylindrische Raum (2) einen Durchmesser von 0,5 bis 2 m und eine Länge von 0,3 bis 1,2 m aufweist, mit Wasser (13) gekühlt wird und innen mit einem feuerfesten Ziegel (14) isoliert ist.

7. Anlage gemäß einem der Ansprüche 5 bis 6, **dadurch gekennzeichnet, dass**
der Expansionsraum (5) mit einer Hydrosperre (6) für den Ausstoß des verglasten Materials und mit einer Öffnung (7) für den Abtransport des Endgasgemisches versehen ist.

8. Anlage gemäß einem der Ansprüche 5 bis 7, **dadurch gekennzeichnet, dass**
der Expansionsraum (5) ein Volumen von 1 bis 5 % des stündlich zu behandelnden Gasvolumens und eine Gasströmungsfläche von 0,2 m⁻¹ des Expansionsraum-(5)-Volumens aufweist.

9. Anlage gemäß einem der Ansprüche 5 bis 8, **dadurch gekennzeichnet, dass**
die Fläche des Expansionsraums (5) 10 bis 15 mal größer ist als die Fläche des zylindrischen Raums (2).

## Revendications

1. Le procédé de traitement thermique par plasma d'un mélange gazeux résultant de la décomposition d'une matière organique par pyrolyse, gazéification, compostage, fermentation naturelle ou autres procédés de décomposition, **caractérisé en ce qu'**il consiste en :
- l'alimentation d'un mélange gazeux divisé en 2 à 4 courants différents contenant 10 à 60 g/m³ de goudron, tangentiel à la direction d'un jet de plasma, de sorte que le mélange gazeux crée un tourbillon autour du jet de plasma qui a une température de 10 000 à 16 000 °C et est éjecté avec un air de soufflage ayant une pression de 10 à 14 bars et un débit contrôlé ;
- la production de ce fait d'un gaz primaire sans macromolécules organiques mais contenant des matériaux inorganiques vitrifiés ;
- la diminution de la vitesse du gaz primaire par son expansion ;
- le refroidissement du gaz primaire à une température de 800 à 1 000 °C en raison de réactions endothermiques ;
- la solidification et la séparation par gravité du gaz primaire refroidi, de particules inorganiques vitrifiées ;
- le refroidissement du gaz primaire au-dessous de et jusqu'à 60 °C, suivi de son barbotage dans une solution de NaOH pour éliminer les éléments chimiques indésirables, ce qui permet d'obtenir un mélange gazeux final, et
- le transport du mélange gazeux final obtenu à convertir en électricité par cogénération / trigénération, dans lequel
- l'écoulement contrôlé du jet de plasma dépend de la quantité de CO₂ mesurée dans le mélange gazeux final, de sorte que, en fonction de la teneur en CO₂, la quantité d'air utilisée pour produire le jet de plasma est automatiquement ajustée de sorte que le pourcentage de CO₂ tend positivement vers zéro.

2. Procédé selon la revendication 1, dans lequel le mélange gazeux, tel que divisé en 2 à 4 courants différents, est alimenté à une vitesse de 20 à 25 m/s.

3. Procédé selon l'une quelconque des revendications 1 à 2, **caractérisé en ce que** l'alimentation en air utilisée pour la génération et l'expansion du plasma sous forme de jet est dosée de telle sorte que la quantité de CO₂ mesurée dans le mélange gazeux final ne dépasse pas 0,1 %.

4. Procédé selon l'une quelconque des revendications 1 à 3, **caractérisé en ce qu'**il est réalisé à une pression inférieure à la pression atmosphérique, évitant ainsi toute fuite de gaz.

5. Installation de traitement thermique par plasma d'un mélange gazeux résultant de la décomposition de matières organiques par pyrolyse, gazéification, compostage, fermentation naturelle ou autres procédés de décomposition **caractérisée en ce qu'**elle comprend un réacteur (1) constitué d'une chambre cylindrique (2) où est disposé axialement un générateur de plasma (4) qui produit un jet de plasma, et une chambre d'expansion (5) munie d'un verrou hydraulique (6) pour l'évacuation des matériaux vitrifiés, d'un échangeur thermique (8) pour le refroidissement du gaz primaire obtenu, d'un épurateur (9) pour un traitement chimique du gaz, d'un analyseur de CO₂ (10), lequel dispositif, en cours d'utilisation, surveille la teneur en CO₂ et ajuste la quantité d'oxygène / d'air utilisée dans le générateur de plasma (4) et un système de déplacement de gaz (11) pour son acheminement vers les équipements de production d'électricité en cogénération / trigénération, la chambre cylindrique (2) étant munie de 2 à 4 systèmes d'aspiration (3) du gaz à traiter, disposés tangentiellement.

6. Installation selon la revendication 5, **caractérisée en ce que** la chambre cylindrique (2) a un diamètre de 0,5 à 2 m et une longueur de 0,3 à 1,2 m est refroidie à l'eau (13) et isolée, à l'intérieur, avec une brique réfractaire (14).

7. Installation selon l'une quelconque des revendications 5 à 6, **caractérisée en ce que** la chambre d'expansion (5) est munie d'un verrou hydraulique (6) pour le rejet du matériau vitrifié et d'une ouverture (7) pour l'évacuation du mélange gazeux final.

8. Installation selon l'une quelconque des revendications 5 à 7, **caractérisée en ce que** la chambre d'expansion (5) a un volume de 1 à 5 % du volume horaire du gaz à traiter et une aire d'écoulement du gaz de 0,2 m⁻¹ du volume de la chambre d'expansion (5).

9. Installation selon l'une quelconque des revendications 5 à 8, **caractérisée en ce que** l'aire de la chambre d'expansion (5) est 10 à 15 fois plus grande que l'aire de la chambre cylindrique (2).
